# EUROPÄISCHE PATENTSCHRIFT

(11) **EP 3 029 391 B1**
(45) Veröffentlichungstag und Bekanntmachung des Hinweises auf die Patenterteilung: **04.06.2025**
(21) Anmeldenummer: 15196150.5
(22) Anmeldetag: 24.11.2015
(51) Int. Cl.: F24F 12/00, F24F 11/00, F24F 11/83, F24F 110/10, F24F 140/20, F24F 11/63, F24F 11/85

(54) **VERFAHREN ZUR REGELUNG DES WÄRMETRÄGER-VOLUMENSTROMS EINES KREISLAUFVERBUNDSYSTEMS UND VORRICHTUNG DAFÜR**
METHOD FOR CONTROLLING THE HEAT CARRIER VOLUME FLOW OF A HEAT RECOVERY SYSTEM AND DEVICE THEREFORE
PROCEDE DE REGLAGE D'UN DEBIT VOLUMIQUE DE CALOPORTEUR D'UN SYSTEME DE RECUPERATION DE CHALEUR ET APPAREIL POUR EFFECTUER LE PROCEDE

(30) Priorität: 27.11.2014 DE 102014117477; 24.12.2014 DE 202014106278 U; 12.03.2015 DE 102015103676
(43) Veröffentlichungstag der Anmeldung: 08.06.2016
(60) Teilanmeldung: 22169607.3
(73) Patentinhaber: Hombücher, Heinz-Dieter, 63179 Obertshausen (DE)
(72) Erfinder: Hombücher, Heinz-Dieter, 63179 Obertshausen (DE)
(74) Vertreter: Stahl, Dietmar

(56) Entgegenhaltungen:
- DE-U1- 202013 105 854

## Beschreibung

Die Erfindung betrifft ein Verfahren zur Regelung des Wärmeträger-Volumenstroms in einem Kreislaufverbundsystem gemäß dem Oberbegriff des Anspruchs 1, sowie ein Kreislaufverbundsystem zur Durchführung eines Verfahrens zur Regelung des Wärmeträger-Volumenstroms gemäß dem Oberbegriff des Anspruchs 3 und eine Verwendung eines Kreislaufverbundsystems gemäß Anspruch 5.

Verfahren zur Wärmerückgewinnung sind in Verbindung mit Kreislaufverbundsystemen weithin bekannt und werden auch häufig eingesetzt. Hierzu wurde in einem Fachaufsatz von Dr. Ing. Christoph Kaup, "Hybride Hochleistungs-WRG auf Basis des Kreislaufverbundsystems" aus dem Fach Journal 2004/05, Seite 4 bis 11, berichtet. Weitere Veröffentlichungen hierzu sind in "Wärme- und Kälterückgewinnung in raumlufttechnischen Anlagen", 5. Auflage, 2001, ISBN 3-8041-2233-7 dokumentiert.

In beiden Veröffentlichungen wird ausgeführt, dass der abzuführenden Abluft eines Lüftungsgerätes Energie entzogen wird. Diese zurückgewonnene Energie wird dann an die dem Lüftungsgerät zuzuführende Zuluft wieder übergeben.

Dabei wird der Wärmeentzug aus der Abluft geregelt, indem weniger oder mehr Wärmeträger (Zwischenmedium) durch den Abluftwärmeübertrager und durch den Zuluftwärmeübertrager gepumpt wird.

Der erforderliche oder gewünschte Volumenstrom des Wärmeträgers (Zwischenmedium) wird mit Hilfe der Wärmestromkapazitäten für den Luftvolumenstrom und den Volumenstrom des Zwischenmediums (Wärmeträger) nach dem Zusammenhang m_{L} x c_{pL} = m_{Z} x c_{pZ} (L = Luftseite / Z = Zwischenmedium) berechnet. Damit lässt sich der erforderliche Volumenstrom des Wärmeträgers jedoch nur unzureichend regeln. Zum einen sind die spezifischen Wärmekapazitäten c_{pL} für Luft und c_{pZ} für das Zwischenmedium (Wärmeträger) nicht konstant. Zum anderen können auch die Massenströme m_{L} und m_{Z} variieren. Außerdem benötigt man zur Ermittlung der Massenströme zu den durchgesetzten Luftströmen geeignete Messeinrichtungen für die zugehörigen Volumenströme, die jedoch auch nur mit einem recht ausgeprägten Toleranzbereich zur Verfügung stehen. Zudem benötigt man für die Berechnung der Wärmekapazitäten über die Massenströme der Luft den Luftvolumenströmen zugeordnete Temperatur- und Feuchtemesseinrichtungen. Dies dient zu Bestimmung der Dichte der Luftvolumenströme und erhöht die Komplexität des Lüftungsgerätes nicht unbeträchtlich.

Aus der DE 20 2013 105 854 U1 ist eine Wärmerückgewinnung für Lüftungsanlagen bekannt die eine Wärmerückgewinnungsanlage für eine raumlufttechnische Anlage aufweist. In einem Abluftstrom ist ein erster Wärmetauscher und in einem Zuluftstrom ein zweiter Wärmetauscher vorgesehen, die mit einem diese zu einem Kreislaufverbundsystem verbindenden Rohrsystem mit einem Wärmeträger gekoppelt sind. Eine Pumpe wälzt den Wärmeträger um. Einige Messsensoren sind mit einer Regeleinheit zur Regelung der Pumpe auf der Grundlage eines Vergleichs erfasster Messwerte als Istwerte mit Sollwerten vorgesehen. Messsensoren dienen zum Ermitteln einer Lufttemperatur und einer Wärmeträgertemperatur. Hierbei werden für die Pumpenregelung ausschließlich erfasste Temperatur-Messwerte als Istwerte mit einem Sollwert verglichen. Dabei offenbart die DE 20 2013 105 854 U1 ein Verfahren gemäß dem Oberbegriff von Anspruch 1 sowie ein Kreislaufverbundsystem gemäß dem Oberbegriff von Anspruch 3.

Eine mit den zuvor beschriebenen Eigenschaften des Standes der Technik ausgestattete Vorrichtung für die Wärmerückgewinnung ist also doch recht aufwändig. Die tatsächlich erreichbare Wärmerückgewinnung weicht in diesem Fall sogar nach unten von der berechneten Wärmerückgewinnung ab. Grund dafür sind die zuvor bereits genannten systembedingten Messungenauigkeiten und zwangsläufig anfallenden Toleranzen bei der Wertermittlung.

Nach der im Stand der Technik vorgeschlagenen Lösung unterschreitet daher die tatsächlich gewonnene Wärmeenergiemenge diejenige Wärmeenergiemenge, die maximal zurückgewonnen werden kann.

Dies gilt insbesondere dann, wenn
- ungleiche Luftmassenströme im Vergleich zwischen Zu- und Abluft gefördert werden,
- ein unterschiedlicher Wassergehalt der Abluft gegeben ist und ebenfalls
- wenn unterschiedliche Ablufttemperaturen und Außentemperaturen vorliegen. Außerdem ändern sich mit den unterschiedlichen Temperaturen die thermodynamischen Eigenschaften des Wärmeträgers indem
- im Teillastvolumenstrom sich die innere Wärmeübergangszahl auf Grund der niedrigeren Geschwindigkeit des Wärmeträgers ändert und/oder
- sich mit der Wetterlage und der örtlichen Höhenlage der Lüftungsanlage die Dichte der Luft ändert.

Weiterhin ist aus DE 10 2012 105 255 A1 eine Vorrichtung zur Regelung eines definierten Förderstroms ohne Durchflussmesseinrichtung bekannt. Hierbei ist eine programmierbare Regeleinrichtung in Verbindung mit einem Frequenzumrichter für die Kreiselpumpe in einem Hydrauliksystem einer Wärmepumpe auf deren Verflüssigerseite vorgesehen. Die Regeleinrichtung ermittelt den erforderlichen Förderstrom auf Grund der angeforderten Heizleistung der Wärmepumpe. In einem Kreislaufverbundsystem wird dazu einer Regeleinrichtung über ein analoges oder digitales Signal des Luftvolumenstromes eines Lüftungsgerätes für die Ermittlung der Betriebsparameter einer Kreiselpumpe übermittelt. Die Einrichtung weist die gleichen zuvor beschriebenen Nachteile des weiteren Standes der Technik auf. Aufgabe der vorliegenden Erfindung ist es daher, mit wenig Aufwand eine hocheffektive Wärme- und Kälterückgewinnung auch bei unterschiedlichsten Außen- und Ablufttemperaturen, unterschiedlichen Feuchten der Zu- und Abluft sowie unterschiedlichen Luftvolumenströme der Zuluft und der Abluft durch leistungsangepasste Regelung des Wärmeträger-Volumenstroms zu erreichen.

Zur Lösung der Aufgabe wird ein Verfahren zur Regelung eines Wärmeträger-Volumenstroms in einem Kreislaufverbundsystem nach den Merkmalen von Anspruch 1 vorgeschlagen.

Ein Verfahren zur Regelung eines Wärmeträger-Volumenstroms wird in einem Kreislaufverbundsystem mit wenigstens einem in einem Zuluftvolumenstrom angeordneten Zuluftwärmeübertrager und wenigstens einem in einem Abluftvolumenstrom angeordneten Abluftwärmeübertrager durchgeführt. Der/die Zuluftwärmeübertrager und der/die Abluftwärmeübertrager sind mittels Wärmeträgerleitungen derart gekoppelt, dass ein Wärmeträger mittels wenigstens einer Umwälzpumpe nacheinander durch alle im Zuluftvolumenstrom angeordneten Zuluftwärmeübertrager und danach durch alle im Abluftvolumenstrom angeordneten Abluftwärmeübertrager förderbar ist.

Erfindungsgemäß wird das Kreislaufverbundsystem auf der Basis von Temperaturmessungen des Wärmeträger-Volumenstroms vor dem Eintritt in den/die Abluftwärmeübertrager und nach dem Austritt aus dem/den Abluftwärmeübertragern, sowie einer parallel dazu ausgeführten Volumenstrommessung des Wärmeträger-Volumenstroms betrieben, wobei durch Änderung der Drehzahl der Umwälzpumpe, der Wärmeträger-Volumenstroms so ausgeregelt wird, dass mittels des gemessenen Wärmeträger-Volumenstroms und der Temperaturmessungen eine Ermittlung einer maximal möglichen Leistungsübertragung mittels des Wärmeträgers erfolgt und die Drehzahl der Umwälzpumpe und damit der Wärmeträger-Volumenstrom derart geregelt werden, dass eine maximal mögliche Leistungsübertragung mittels des Wärmeträgers erfolgt.

Weiterhin wird der Wärmeträger-Volumenstrom in dem Kreislaufverbundsystem auf der Basis von Temperaturmesswerten des Wärmeträgers vor dem Eintritt des Abluftvolumenstroms in den/die Abluftwärmeübertrager und nach dem Austritt aus dem/den Abluftwärmeübertragern sowie einer parallel dazu ausgeführten Volumenstrommessung des Wärmeträger-Volumenstroms derart geregelt, dass bei Feststellung einer sich steigernden Leistungsübertragung mittels des Wärmeträgers der Wärmeträger-Volumenstrom mittels der Umwälzpumpe nach einer zuvor sich verringernden Leistungsübertragung mittels des Wärmeträgers entgegen einer zuvor vorgenommenen Volumenstromänderung verändert wird oder nach einer zuvor sich steigernden Leistungsübertragung mittels des Wärmeträgers um ein geringeres Maß gegenüber einer zuvor vorgenommenen Volumenstromänderung verändert wird.

Weiterhin kann durch eine nicht von den Ansprüchen erfasste und damit nicht unter die Erfindung fallende Variante des Kreislaufverbundsystems auf der Basis von Temperaturmessungen des Abluftvolumenstroms vor dessen Eintritt in den/die Abluftwärmeübertrager und nach dessen Austritt aus dem/den Abluftwärmeübertragern sowie des Zuluftvolumenstroms vor dessen Eintritt in den/ die Zuluftwärmeübertrager mit einem maximal möglichen Temperaturänderungsgrad in dem Abluftvolumenstrom betrieben werden.

Weiterhin kann durch eine nicht von den Ansprüchen erfasste Ausführung das Kreislaufverbundsystem auf der Basis von Temperaturmessungen des Zuluftvolumenstroms vor dem Eintritt in den/die Zuluftwärmeübertrager und nach dem Austritt aus dem/den Zuluftwärmeübertragern sowie des Abluftvolumenstroms in den/die Abluftwärmeübertrager mit einem maximal möglichen Temperaturänderungsgrad in dem Zuluftvolumenstrom betrieben werden.

In einer anderen nicht von den Ansprüchen erfassten Ausführung wird der Wärmeträger-Volumenstrom in dem Kreislaufverbundsystem auf der Basis von Temperaturmesswerten des Abluftvolumenstroms vor dem Eintritt in den/die Abluftwärmeübertrager und nach dem Austritt aus dem/den Abluftwärmeübertragern oder von Temperaturmesswerten des Zuluftvolumenstroms vor dem Eintritt in den/die Zuluftwärmeübertrager und nach dem Austritt aus dem/den Zuluftwärmeübertragern derart geregelt, dass bei Feststellung einer Verringerung eines Temperaturänderungsgrades im jeweiligen Luftvolumenstrom gegenüber einem maximal möglichen Temperaturänderungsgrad der Wärmeträger-Volumenstrom mittels der Umwälzpumpe entgegen einer zuvor vorgenommenen Volumenstromänderung verändert wird.

Ein erfindungsgemäßes Kreislaufverbundsystem weist in einer Wärmeträgerleitung einen Temperaturfühler vor dem Eintritt des Wärmeträgers in den/die Abluftwärmeübertrager und in einer Wärmeträgerleitung einen Temperaturfühler nach dem Austritt des Wärmeträgers aus dem/den Abluftwärmeübertragern auf. Weiterhin ist eine Volumenstrommesseinrichtung der Umwälzpumpe zugeordnet. Eine Regeleinrichtung ist in Verbindung mit den Temperaturfühlern, der Volumenstrommesseinrichtung und der Umwälzpumpe vorgesehen.

Die Verbindung ist so vorgesehen, dass auf Basis der festgestellten Messwerte mittels Veränderung des Wärmeträger-Volumenstroms eine steigende oder sinkende Leistungsübertragung des Wärmeträgers ausgeregelt wird.

Eine andere nicht von den Ansprüchen erfasste Vorrichtung weist in einem ersten Luftvolumenstrom je einen Temperaturfühler vor dem Eintritt und nach dem Austritt des Volumenstroms aus den/die diesem zugeordneten Wärmeübertrager auf. Weiterhin ist ein Temperaturfühler nach dem Austritt aus dem/den Wärmeübertragern des jeweils anderen Luftvolumenstroms angeordnet. Eine Regeleinrichtung ist in Verbindung mit den Temperaturfühlern und der Umwälzpumpe vorgesehen, derart, dass auf Basis der festgestellten Messwerte mittels Veränderung des Wärmeträger-Volumenstroms ein sinkender Temperaturänderungsgrad des jeweils ersten Luftvolumenstroms ausgeregelt wird.

In einer nicht von den Ansprüchen erfassten Ausführung ist im Abluftvolumenstrom ein Temperaturfühler zur Erfassung einer Ablufttemperatur vor dem Eintritt und ein Temperaturfühler zur Erfassung einer Fortlufttemperatur nach dem Austritt des Abluftvolumenstroms aus dem/den Abluftwärmeübertragern vorgesehen. Ein weiterer Temperaturfühler zur Erfassung einer Außenlufttemperatur ist nach dem Austritt aus dem/den Zuluftwärmeübertragern des Zuluftvolumenstroms angeordnet. Die Temperaturfühler sind mit der Regeleinrichtung verbunden.

In einer nicht zur Erfindung gehörenden Variante ist im Zuluftvolumenstrom ein Temperaturfühler zur Erfassung einer Außenlufttemperatur vor dem Eintritt und ein Temperaturfühler zur Erfassung einer Zulufttemperatur nach dem Austritt des Zuluftvolumenstroms aus dem/den Zuluftwärmeübertragern angeordnet. Ein weiterer Temperaturfühler zur Erfassung einer Fortlufttemperatur ist nach dem Austritt aus dem/den Abluftwärmeübertragern des Abluftvolumenstroms angeordnet. Die Temperaturfühler sind mit der Regeleinrichtung verbunden.

In Weiterbildung ist eine Anordnung eines erfindungsgemäßen_Kreislaufverbundsystems in Verbindung mit mehreren Lüftungsgeräten vorgesehen.

In Weiterbildung ist weiterhin die Verwendung eines erfindungsgemäßen Kreislaufverbundsystems für die Entfeuchtung eines Luftvolumenstroms vorgesehen.

Bevorzugt ist ein Kreislaufverbundsystem aus mindestens einem Rohrleitungssystem, einer Umwälzpumpe, einem Frequenzumrichter, einem Durchflussmesser mit stetigem Ausgangssignal, mindestens zwei Temperaturfühlern, sowie einer Messeinrichtung mit speicherprogrammierbarer Steuerung und stetigem Regler aufgebaut. Mit den beiden Temperaturfühlern wird die Eintrittstemperatur des Wärmeträgers in den Abluftwärmeübertrager sowie die Austrittstemperatur aus dem Abluftwärmeübertrager gemessen und an eine speicherprogrammierbare Steuerung (SPS) zur Verarbeitung im Regelungsprozess übertragen. In der speicherprogrammierbaren Steuerung (SPS) wird die Leistung nach dem Zusammenhang Q = V x 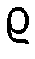 x c x Δt / 3,6 (V = Volumenstrom / 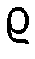 = Dichte / c = spezifische Wärmekapazität / Δt = Temperaturdifferenz vor und nach dem Wärmeübertrager) ermittelt. Mittels des stetigen Reglers wird dann über den Frequenzumrichter die Drehzahl der Umwälzpumpe verringert oder erhöht, so dass immer die höchstmögliche Leistung bei der Wärmerückgewinnung erzielt wird.

Wenn der stetige Regler den Volumenstrom des Wärmeträgers verringert und wenn sich dabei die Leistung ebenfalls verringert, wird der Wärmeträger-Volumenstrom vom Regler wieder erhöht. Erhöht der Regler den Wärmeträger-Volumenstrom und die Leistung wird geringer so wird der Regler den Wärmeträger-Volumenstrom wieder verringern.

Dabei können die Dichte 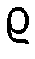 und die Wärmekapazität c als Konstanten in die Formel des zuvor beschriebenen Zusammenhangs eingesetzt werden. Andererseits ist es auch möglich mit Hilfe bekannter Zusammenhänge in Formeln für den verwendeten Wärmeträger und anhand der gemessenen Temperaturen die tatsächliche Dichte 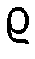 und die tatsächliche Wärmekapazität c zu bestimmen und mit diesen Werten die Leistung zu berechnen. Wenn mit den gemessenen Temperaturen die Dichte 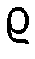 und die Wärmekapazität c des Wärmeträgers berechnet wird, erhält man den Wert der maximal erreichbaren Entzugsleistung, die aus der Abluft entnommen werden kann. Dieser Wert kann dann an einer Anzeigeeinrichtung anzeigt werden.

Nach einem anderen nicht durch die Ansprüche erfassten Verfahren kann durch Maximierung des Temperaturänderungsgrades anstelle der Berechnung der Leistungsübertragung der optimale Wärmeträger-Volumenstrom ermittelt werden, wobei dies unabhängig von den Luft-Volumenströmen der Zuluft und der Abluft sowie der Feuchte in der Abluft erfolgt. Hierzu wird die Temperatur der Abluft, der Fortluft und der Außenluft gemessen und an eine SPS-Einrichtung (Speicher Programmierbare Steuerung) übertragen. Mit Hilfe der SPS-Einrichtung wird hierbei über eine Formel für einen Temperaturänderungsgrad Φ = (tABL - tFOL) / (tABL - tAUS) der größte Temperaturänderungsgrad ermittelt. Mittels eines stetigen Reglers wird dann über den Frequenzumrichter die Drehzahl der Umwälzpumpe verringert oder erhöht, so dass immer der größte Temperaturänderungsgrad erzielt wird. Wenn von dem stetigen Regler der Wärmeträger-Volumenstrom verringert wird und sich dabei der Temperaturänderungsgrad ebenfalls verringert, wird der Wärmeträger-Volumenstrom vom stetigen Regler wieder erhöht. Erhöht der stetige Regler den Wärmeträger-Volumenstrom und der Temperaturänderungsgrad wird danach kleiner, so wird der Wärmeträger-Volumenstrom vom stetigen Regler wieder verringert.

Die mit der Erfindung erzielbaren Vorteile bestehen unter anderem in den im Folgenden beschriebenen Wirkungen:
a) Der Massenstrom der Zuluft und der Abluft muss für die Bestimmung des Wärmeträger-Volumenstroms nicht mehr gemessen werden.
b) Die Abluftfeuchte muss für die Bestimmung des Wärmeträger-Volumenstroms nicht mehr gemessen werden.
c) Ungenauigkeiten bei der Messung und Berechnung der Wärmekapazitäten werden eliminiert.
d) Ungenauigkeiten bei der Messung und zur Berechnung der Zu- und Abluftvolumenströme durch systembedingt vorliegende Toleranzen werden eliminiert.
e) Es können mehrere Lüftungsgeräte an ein einziges Kreislaufverbundsystem angeschlossen werden.
f) Auch bei der Einkopplung von Wärme und Kälte wird stets der optimale Wärmeträger-Volumenstrom ermittelt.
g) Der messtechnische Aufwand ist insgesamt geringer.
h) Die Wärmerückgewinnung aus der Abluft wird maximiert.
i) Die Kälterückgewinnung aus der Abluft wird maximiert.
j) Änderungen der inneren Wärmeübergangszahl bei verringerter Strömungsgeschwindigkeit des Wärmeträgers werden automatisch mitberücksichtigt.

Ein Ausführungsbeispiel der Erfindung sowie weitere, nicht unter die Erfindung fallende Beispiele, sind im Folgenden anhand von Zeichnungen beispielhaft dargestellt. Dabei zeigen
- Figur 1: Ausführungsbeispiel eines Kreislaufverbundsystem gemäß der Erfindung zur Regelung eines Wärmeträger-Volumenstroms über eine maximal mögliche Wärmeträger-Leistungsübertragung,
- Figur 2: eine nicht unter die Erfindung fallende Anordnung zur Regelung eines Wärmeträger-Volumenstroms über einen maximal möglichen Temperaturänderungsgrad,
- Figur 3: eine weitere Ausführungsform der Anordnung nach Figur 1,
- Figur 4: eine weitere Ausführungsform der Anordnung nach Figur 2,
- Figur 5: eine nicht unter die Erfindung fallende Anordnung zur Regelung eines Wärmeträger-Volumenstroms über einen maximal möglichen Temperaturänderungsgrad,
- Figur 6: ein Ablaufschema eines erfindungsgemäßen Regelvorgangs auf Basis von Temperaturmessungen des Wärmeträgers, und
- Figur 7: ein Ablaufschema eines nicht durch die Ansprüche erfassten Regelvorgangs auf Basis von Temperaturmessungen des Abluftvolumenstroms und des Zuluftvolumenstroms.

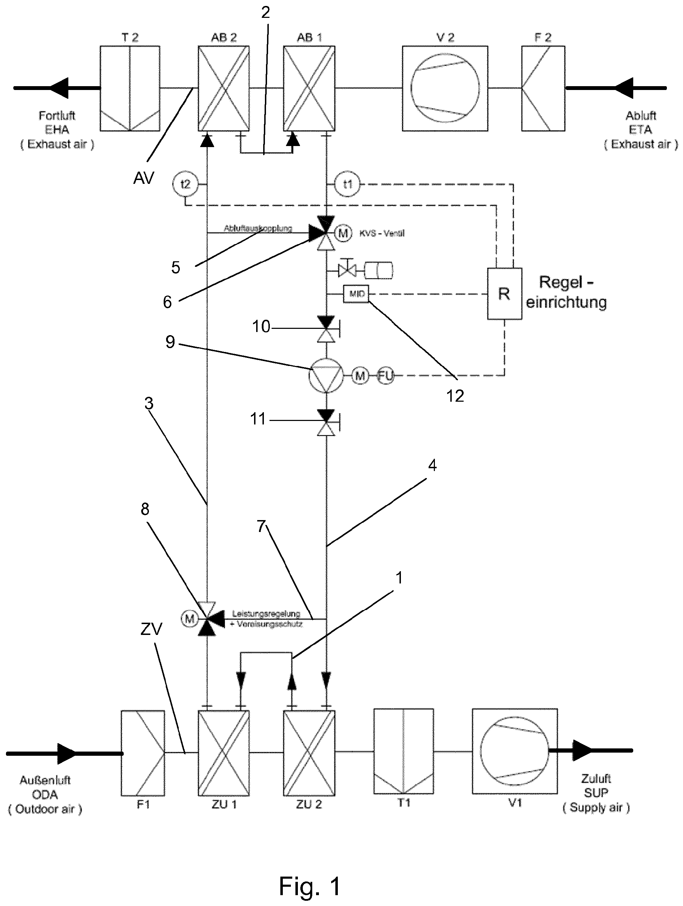

In Figur 1 ist eine erfindungsgemäße Anordnung eines Kreislaufverbundsystems gezeigt. Das Kreislaufverbundsystem weist im Zuluftvolumenstrom ZV zwischen einer Zuführung von Außenluft und einer Abführung von Zuluft zwei Zuluftwärmeübertrager ZU1 und ZU2 auf. Diese sind mittels einer Wärmeträgerleitung 1 entgegen der Strömungsrichtung des Zuluftvolumenstroms ZV in Reihe geschaltet. Den Zuluftwärmeübertragern ZU1, ZU2 ist im Zuluftvolumenstrom ZV ein Filter F1 im Zuluftvolumenstrom ZV vorgeschaltet und es sind ein Tropfenabscheider T1 und ein Zuluftventilator V1 nachgeschaltet.

Das Kreislaufverbundsystem weist im Abluftvolumenstrom AV zwischen einer Zuführung von Abluft und einer Abführung von Fortluft zwei Abluftwärmeübertrager AB1 und AB2 auf. Diese sind mittels einer Wärmeträgerleitung 2 entgegen der Strömungsrichtung des Abluftvolumenstroms AV in Reihe geschaltet. Den Abluftwärmeübertragern AB1, AB2 sind im Abluftvolumenstrom AV ein Filter F2 und ein Abluftventilator V1 im Abluftvolumenstrom AV vorgeschaltet und es ist ein Tropfenabscheider T2 nachgeschaltet.

Der Zuluftwärmeübertrager ZU1 und der Abluftwärmeübertrager AB2 sind mittels einer Wärmeträgerleitung 3 in einer Strömungsrichtung zum Abluftwärmeübertrager AB2 hin miteinander verbunden.

Der Zuluftwärmeübertrager ZU2 und der Abluftwärmeübertrager AB1 sind mittels einer Wärmeträgerleitung 4 in einer Strömungsrichtung zum Zuluftwärmeübertrager ZU2 hin miteinander verbunden.

Die Wärmeträgerleitungen 3, 4 sind durch eine Leitung 5 zur Abluftauskoppelung in Strömungsrichtung zur Wärmeträgerleitung 4 gekoppelt. Die Leitung 5 ist durch ein motorisch regelbares KVS-Ventil 6 in die Wärmeträgerleitung 4 eingekoppelt.

Die Wärmeträgerleitungen 3, 4 sind weiterhin durch eine Leitung 7 zur Leistungsregelung und zum Vereisungsschutz in Strömungsrichtung zur Wärmeträgerleitung 3 gekoppelt. Die Leitung 7 ist durch ein motorisch regelbares Ventil 8 in die Wärmeträgerleitung 3 eingekoppelt.

In die Wärmeträgerleitung 4 ist weiterhin eine Umwälzpumpe 9 mit einer Förderrichtung von dem Abluftwärmeübertrager AB1 zum Zuluftwärmeübertrager ZU2 angeordnet. Die Umwälzpumpe 9 fördert den Wärmeträger durch die Zuluftwärmeübertrager ZU1, ZU2, das Ventil 8, die Abluftwärmeübertrager AB2, AB1 und das KVS-Ventil 6 wieder zur Umwälzpumpe 9. In der Wärmeträgerleitung 4 ist der Umwälzpumpe 9 ein Absperrventil 10 vorgeordnet und ein Absperrventil 11 nachgeordnet.

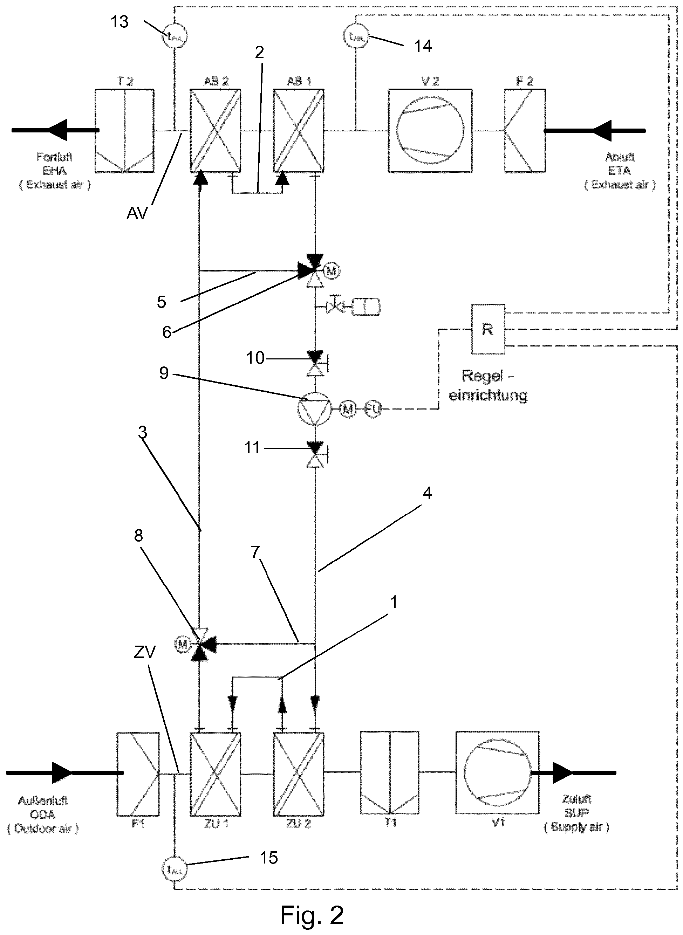

Diese gerätetechnischen Zusammenhänge gelten auch im Wesentlichen für die Figuren 2 bis 4.

Nach Figur 1 ist erfindungsgemäß in der Wärmeträgerleitung 3 ein Temperaturfühler t2 vor dem Eintritt des Wärmeträgers in den Abluftwärmeübertrager AB2 und in der Wärmeträgerleitung 4 ein Temperaturfühler t1 nach dem Austritt des Wärmeträgers aus dem Abluftwärmeübertrager AB1 angeordnet. In der Wärmeträgerleitung 4 ist weiterhin eine Volumenstrommesseinrichtung (Durchflussmesser) 12 für den geförderten Wärmeträger vorgesehen. Die Volumenstrommesseinrichtung (Durchflussmesser) 12 ist hier zwischen dem KVS-Ventil 6 und der Umwälzpumpe 9 angeordnet.

Weiterhin ist eine Regeleinrichtung R in Verbindung mit der Umwälzpumpe 9 und der Volumenstrommesseinrichtung (Durchflussmesser) 12, sowie den Temperaturfühlern t1 und t2 dargestellt.

Die Temperaturfühler t2 und t1 sowie die Volumenstrommesseinrichtung (Durchflussmesser) 12 werden mittels der Regeleinrichtung R auf einen hier nicht näher dargestellten stetigen Regler geschaltet. Mit dem stetigen Regler wird der Wärmeträger-Volumenstrom über die Umwälzpumpe 9 verändert, wobei dieser entweder verringert oder erhöht werden kann. Mittels des stetigen Reglers wird die Temperaturdifferenz an den Temperaturfühlern t1 und t2 ermittelt und die übertragene Leistung berechnet.

Fördert die Umwälzpumpe 9 zu wenig Wärmeträger, so sinkt die übertragene Leistung, weil zu wenig Wärmeträger-Volumenstrom zur Wärmeübertragung gefördert wird. Daraufhin wird der Wärmeträger-Volumenstrom durch die Regeleinrichtung R mittels der Umwälzpumpe 9 wieder erhöht.

Fördert die Umwälzpumpe 9 hingegen zu viel Wärmeträger wird die gemessene Temperaturdifferenz zwischen den Temperaturfühlern t1 und t2 geringer und die übertragene Leistung sinkt wiederum ab. Daraufhin wird der Wärmeträger-Volumenstrom durch die Regeleinrichtung R mittels der Umwälzpumpe 9 wieder verringert.

Wird dieser Wirkzusammenhang von einem Pl-Regler geregelt schwingt sich der Wärmeträger-Volumenstrom kurzfristig auf einen stabilen Wert ein und die übertragene Leistung schwankt immer weniger, bis fast kein Schwingen mehr erkennbar ist.

Mittels des KVS-Ventils 6 kann der Wärmeträger über die Leitung 5 an den Wärmeübertragern AB2 und AB1 vorbeigeführt werden, wenn aus dem Abluftvolumenstrom AV mehr Energie entnommen werden kann als im Zuluftvolumenstrom ZV benötigt wird.

Das KVS-Ventil 6 wird zu diesem Zweck mit Hilfe einer zusätzlichen, hier nicht dargestellten Messung der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann ein erster weiterer hier nicht dargestellter Temperaturfühler in dem Abluftvolumenstrom AV vor dem Eintritt in die Abluftwärmeübertrager AB1, AB2 eingesetzt werden. Ein weiterer zweiter, ebenfalls hier nicht dargestellter Temperaturfühler kann dann vor den Zuluftwärmeübertragern ZU1, ZU2 im Zuluftvolumenstrom ZV eingesetzt werden. Diese Anordnung wird gewählt, wenn mit der Einrichtung auch Kälterückgewinnung betrieben werden soll. Ist die Temperatur vor den Zuluftwärmeübertragern ZU1, ZU2 höher als die Temperatur vor den Abluftwärmeübertragern AB1, AB2 wird der Wärmeträger im Kühlfall durch alle Wärmeübertrager geleitet.

Ist die Ablufttemperatur im Kühlfall vor den Abluftwärmeübertragern AB1, AB2 höher als die Zulufttemperatur vor den Zuluftwärmeübertragern ZU1, ZU2 wird der Wärmeträger mittels des KVS-Ventils 6 über die Leitung 5 als Bypass zur Abluftauskopplung geleitet.

Sind im Heizfall die vorgesehenen Wärmeübertrager so effektiv, dass der Zuluftvolumenstrom ZV auf Grund einer zu großen Energiezufuhr aus dem Abluftvolumenstrom AV für die bestehenden Anforderungen zu warm werden könnte, kommt ein weiterer dritter hier nicht dargestellter Temperaturfühler nach den Zuluftwärmeübertragern ZU1, ZU2 im Zuluftvolumenstrom ZV zum Einsatz.

Unter Verwendung der zuvor benannten Temperaturmessungen und mittels der Regeleinrichtung R kann ebenfalls ein Anteil des Wärmeträgers durch die Leitung 5 als den Bypass zur Abluftauskopplung geführt werden.

In Figur 2 ist eine andere nicht durch die Ansprüche erfasste Anordnung eines Kreislaufverbundsystems dargestellt, wobei hier eine Regelung des Wärmeträger-Volumenstroms über einen maximal möglichen Temperaturänderungsgrad zwischen dem Abluftvolumenstrom AV und dem Zuluftvolumenstrom ZV vorgesehen ist. Der oben genannte Temperaturänderungsgrad wird auch als Rückwärmzahl bezeichnet.

Die Umwälzpumpe 9 fördert hierbei wiederum den Wärmeträger durch die Zuluftwärmeübertrager ZU1, ZU2, das Ventil 8 für den Vereisungsschutz, durch die Abluftwärmeübertrager AB2, AB1 und das KVS-Ventil 6 wieder zur Umwälzpumpe 9 zurück.

In Figur 2 ist ein Temperaturfühler 13 zur Erfassung einer Fortlufttemperatur t_{FOL} im Abluftvolumenstrom AV in dessen Strömungsrichtung nach dem Abluftwärmeübertrager AB2 angeordnet.

Weiterhin ist ein Temperaturfühler 14 zur Erfassung einer Ablufttemperatur t_{ABL} im Abluftvolumenstrom AV in dessen Strömungsrichtung vor dem Abluftwärmeübertrager AB1 angeordnet.

Weiterhin ist ein Temperaturfühler 15 zur Erfassung einer Außenlufttemperatur t_{AUS} im Zuluftvolumenstrom ZV in dessen Strömungsrichtung vor dem Zuluftwärmeübertrager ZU1 angeordnet.

Die Messwerte der Temperaturfühler 13, 14, 15 werden der Regeleinrichtung R zugeleitet, mittels der diese Messwerte auf einen stetigen Regler aufgeschaltet werden. Mit dem stetigen Regler wird der Wärmeträger-Volumenstrom mittels der Umwälzpumpe 9 verändert, wobei dieser entweder verringert oder erhöht werden kann. Mittels des stetigen Reglers werden die Temperaturmesswerte t_{FOL}, t_{ABL} und t_{AUS} von den Temperaturfühlern 13, 14, 15 erfasst und es wird ein daraus sich ergebender Temperaturänderungsgrad berechnet.

Fördert hier die Umwälzpumpe 9 zu wenig Wärmeträger, so wird der aus den Temperaturmesswerten t_{FOL}, t_{ABL} und t_{AUS} berechnete Temperaturänderungsgrad der Luftvolumenströme kleiner, weil zu wenig Wärmeträger-Volumenstrom gefördert und somit zu wenig Leistung übertragen wird. Daraufhin wird der Wärmeträger-Volumenstrom mittels der Umwälzpumpe 9 wieder erhöht.

Wenn hingegen die Umwälzpumpe 9 zu viel Wärmeträger fördert, wird der aus den Temperaturmesswerten t_{FOL}, t_{ABL} und t_{AUS} berechnete Temperaturänderungsgrad der Luftvolumenströme ebenfalls kleiner, woraus sich ergibt, dass die Rückwärmleistung (Rückwärmzahl) sinkt. Daraufhin wird der Wärmeträger-Volumenstrom mittels der Umwälzpumpe 9 wieder verringert.

Wird dieser Prozess der Wärmeübertragung von einem PI-Regler geregelt und dabei beobachtet, ob sich der Wärmeträger-Volumenstrom verkleinert oder vergrößert, schwingt sich der Wärmeträger-Volumenstrom schnell ein und die übertragene Leistung schwankt ständig weniger bis fast kein Schwingen mehr erkennbar ist.

Mittels des KVS-Ventils 6 wird der Wärmeträger an den Abluftwärmeübertragern AB2 und AB1 vorbeigeführt, wenn aus dem Abluftvolumenstrom AV mehr Energie entnommen werden kann als im Zuluftvolumenstrom ZV nach den Vorgaben für die Luftbehandlung benötigt wird. Das KVS-Ventil 6 wird mit Hilfe von Messwerten der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann in der Anordnung nach Figur 2 ein weiterer hier nicht dargestellter Temperaturfühler vor dem Eintritt in die Zuluftwärmeübertrager ZU1, ZU2 im Zuluftvolumenstrom ZV eingesetzt werden, wenn mit der Einrichtung auch Kälterückgewinnung betrieben werden soll.

Ist die Temperatur vor dem Zuluftwärmeübertrager ZU1 höher als die Ablufttemperatur t_{ABL} vor dem Abluftwärmeübertrager AB1 wird der Wärmeübertrager im Kühlfall durch alle Wärmeübertrager geleitet

Ist die Ablufttemperatur t_{ABL} im Kühlfall höher als die Temperatur vor dem Zuluftwärmeübertrager ZU1 wird der Wärmeübertrager über die Leitung 5 als Bypass zur Abluftauskopplung geleitet.

Sind im Heizfall die eingesetzten Wärmeübertrager so effektiv, dass der Zuluftvolumenstrom ZV auf Grund einer zu großen Energiezufuhr aus dem Abluftvolumenstrom AV zu warm werden könnte, kann in der Anordnung nach Figur 2 ein weiterer hier nicht dargestellter Temperaturfühler nach den Zuluftwärmeübertragern ZU1, ZU2 im Zuluftvolumenstrom ZV zum Einsatz kommen.

Unter Verwendung der zuvor benannten Temperaturmessungen und mittels der Regeleinrichtung R kann ebenfalls ein Anteil des Wärmeträgers durch die Leitung 5 als Bypass zur Abluftauskopplung geführt werden.

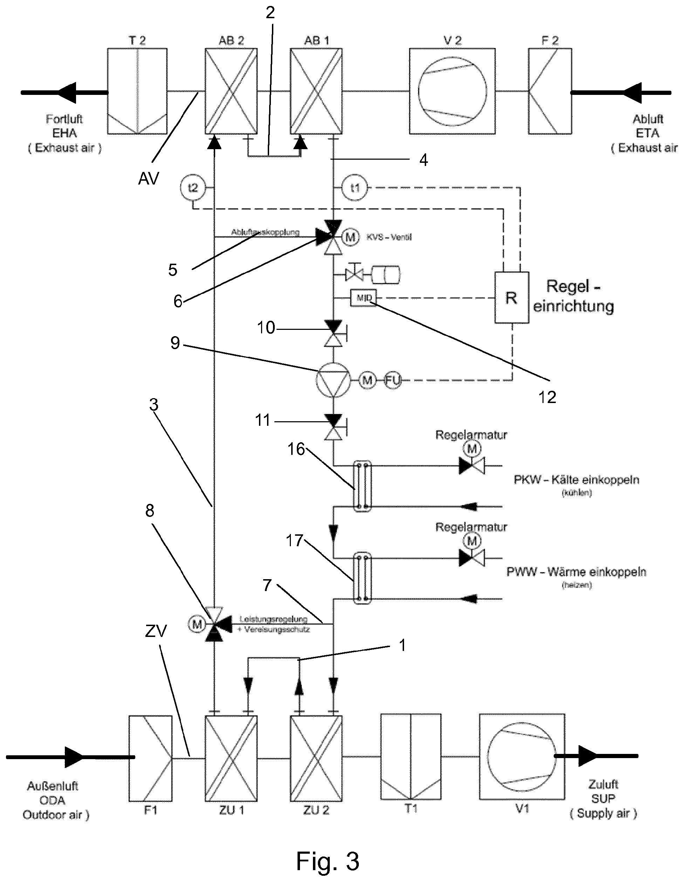

In Figur 3 ist eine erfindungsgemäße Anordnung eines Kreislaufverbundsystems mit einem Temperaturfühler t2 in der Wärmeträgerleitung 3_vor dem Eintritt in den Abluftwärmeübertrager AB2 und einem Temperaturfühler t1 in der Wärmeträgerleitung 4 nach dem Austritt aus dem Abluftwärmeübertrager AB1, wie in Figur 1 beschrieben, gezeigt.

Jedoch besteht hier die Möglichkeit Kälte aus einem Kaltfluidnetz einzukoppeln oder auch Wärme aus einem Warmwassernetz einzukoppeln.

Hierzu ist in die Wärmeträgerleitung 4 ein Wärmeübertrager 16 eingekoppelt. Der Wärmeübertrager 16 ist weiterhin mit einer Leitung 18 für Pumpenkaltwasser PKW gekoppelt. Damit kann über den Wärmeübertrager 16 Kälteenergie in das Kreislaufverbundsystem an der Wärmeträgerleitung 4 übertragen werden bzw. der Wärmeträger kann mittels des Wärmeübertragers 16 gekühlt werden.

Weiterhin ist in die Wärmeträgerleitung 4 ein Wärmeübertrager 17 eingekoppelt. Der Wärmeübertrager 17 ist weiterhin mit einer Leitung 19 für Pumpenwarmwasser PWW gekoppelt. Damit kann über den Wärmeübertrager 16 Wärmeenergie in das Kreislaufverbundsystem an der Wärmeträgerleitung 4 übertragen werden bzw. der Wärmeträger kann mittels des Wärmeübertragers 17 aufgeheizt werden.

Das Maß der Wärmerückgewinnung aus dem Abluftvolumenstrom AV wird durch dieses Verfahren etwas geringer, aber es wird ein großer Anteil der elektrischen Energie für den Zuluftventilator V1 eingespart, weil es für zusätzliche Kühlung oder Heizung nicht erforderlich ist, einen zusätzlichen Kühler oder Erhitzer in dem Zuluftvolumenstrom ZV anzuordnen.

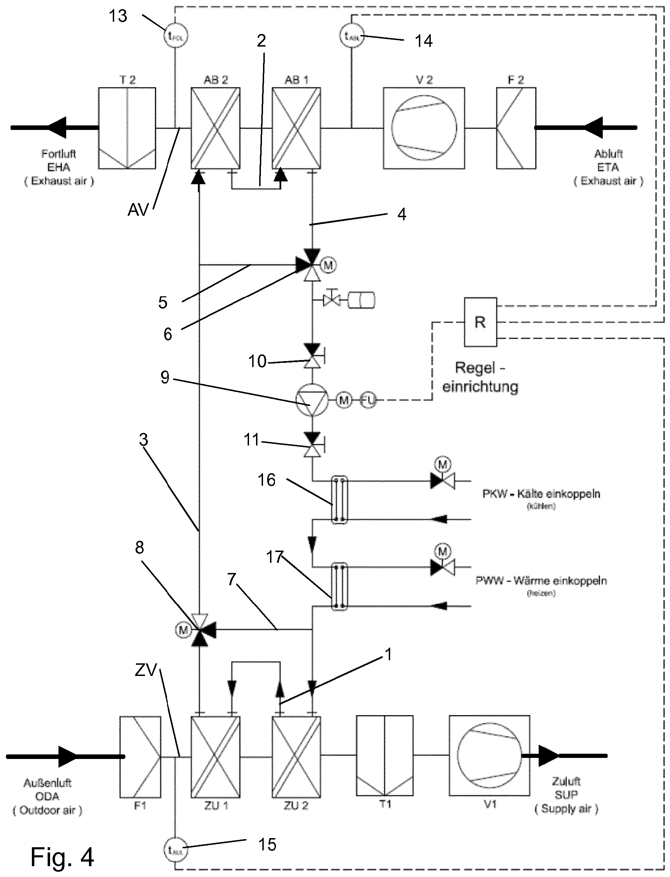

In Figur 4 ist eine andere nicht durch die Ansprüche erfasste Anordnung eines Kreislaufverbundsystems mit einer Regelung des Wärmeträger-Volumenstroms auf der Basis eines maximal möglichen Temperaturänderungsgrades des Abluftvolumenstroms AV dargestellt, wie dies anhand von Figur 2 beschrieben ist.

Hier besteht jedoch entsprechend Figur 3 die Möglichkeit Kälte aus einem Kaltfluidnetz einzukoppeln oder auch Wärme aus einem Warmwassernetz einzukoppeln.

Hierzu ist in die Wärmeträgerleitung 4 ein Wärmeübertrager 16 eingekoppelt. Der Wärmeübertrager 16 ist weiterhin mit einer Leitung 18 für Pumpenkaltwasser PKW gekoppelt. Damit kann über den Wärmeübertrager 16 Kälteenergie in das Kreislaufverbundsystem an der Wärmeträgerleitung 4 übertragen werden bzw. der Wärmeträger kann mittels des Wärmeübertragers 16 gekühlt werden.

Weiterhin ist in die Wärmeträgerleitung 4 ein Wärmeübertrager 17 eingekoppelt. Der Wärmeübertrager 17 ist auch mit einer Leitung 19 für Pumpenwarmwasser PWW gekoppelt. So kann über den Wärmeübertrager 16 Wärmeenergie in das Kreislaufverbundsystem an der Wärmeträgerleitung 4 übertragen werden bzw. der Wärmeträger kann mittels des Wärmeübertragers 17 aufgeheizt werden.

Das Maß der Wärmerückgewinnung aus dem Abluftvolumenstrom AV wird dadurch etwas geringer, aber es wird ein großer Anteil der elektrischen Energie für den Zuluftventilator V1 eingespart, weil es für zusätzliche Kühlung oder Heizung nicht erforderlich ist, einen zusätzlichen Kühler oder Erhitzer in dem Zuluftvolumenstrom ZV anzuordnen.

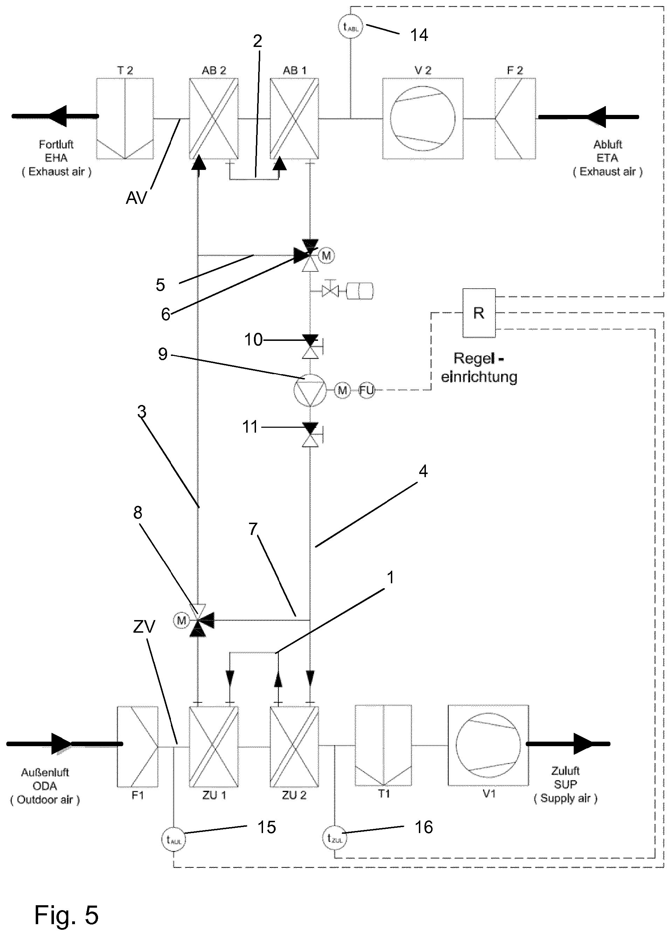

In Figur 5 ist eine andere nicht durch die Ansprüche erfasste Anordnung eines Kreislaufverbundsystems dargestellt, wobei hier eine Regelung des Wärmeträger-Volumenstroms über einen maximal möglichen Temperaturänderungsgrad zwischen dem Zuluftvolumenstrom ZV und dem Abluftvolumenstrom AV vorgesehen ist. Der oben genannte Temperaturänderungsgrad wird auch als Rückwärmzahl RWZ bezeichnet.

Die Umwälzpumpe 9 fördert hierbei wiederum den Wärmeträger durch die Zuluftwärmeübertrager ZU1, ZU2, das Ventil 8 für den Vereisungsschutz, durch die Abluftwärmeübertrager AB2, AB1 und das KVS-Ventil 6 wieder zur Umwälzpumpe 9 zurück.

In Figur 5 ist ein Temperaturfühler 15 zur Erfassung einer Außenlufttemperatur t_{AUS} im Zuluftvolumenstrom ZV in dessen Strömungsrichtung vor dem Zuluftwärmeübertrager ZU1 angeordnet.

Weiterhin ist ein Temperaturfühler 16 zur Erfassung einer Zulufttemperatur t_{ZUL} im Zuluftvolumenstrom ZV in dessen Strömungsrichtung vor dem Zuluftwärmeübertrager ZU1 angeordnet.

Weiterhin ist Temperaturfühler 13 zur Erfassung einer Ablufttemperatur t_{ABL} im Abluftvolumenstrom AV in dessen Strömungsrichtung vor dem Abluftwärmeübertrager AB1 angeordnet.

Die Messwerte der Temperaturfühler 15, 16, 13 werden der Regeleinrichtung R zugeleitet. Mittels der Regeleinrichtung R werden diese Messwerte auf einen stetigen Regler geschaltet. Mit dem stetigen Regler wird der Wärmeträger-Volumenstrom mittels der Umwälzpumpe 9 verändert, wobei dieser entweder verringert oder erhöht werden kann. Mittels des stetigen Reglers werden die Temperaturmesswerte t_{ZUL}, t_{ABL} und t_{AUS} von den Temperaturfühlern 15, 16, 13 erfasst und es wird ein daraus sich ergebender Temperaturänderungsgrad berechnet.

Fördert hier die Umwälzpumpe 9 zu wenig Wärmeträger, so wird der aus den Temperaturmesswerten t_{ZUL}, t_{ABL} und t_{AUS} berechnete Temperaturänderungsgrad der Luftvolumenströme ZV, AV kleiner, weil zu wenig Wärmeträger-Volumenstrom gefördert und somit zu wenig Leistung übertragen wird. Daraufhin wird der Wärmeträger-Volumenstrom mittels der Umwälzpumpe 9 wieder erhöht.

Wenn hingegen die Umwälzpumpe 9 zu viel Wärmeträger fördert, wird der aus den Temperaturmesswerten t_{ZUL}, t_{ABL} und t_{AUS} berechnete Temperaturänderungsgrad der Luftvolumenströme ebenfalls kleiner, woraus sich ergibt, dass die Rückwärmleistung (Rückwärmzahl) sinkt. Daraufhin wird der Wärmeträger-Volumenstrom mittels der Umwälzpumpe 9 wieder verringert.

Wird dieser Prozess der Wärmeübertragung von einem PI-Regler geregelt und dabei beobachtet, ob sich der Wärmeträger-Volumenstrom verkleinert oder vergrößert, schwingt sich der Wärmeträger-Volumenstrom schnell ein und die übertragene Leistung schwankt ständig weniger bis fast kein Schwingen mehr erkennbar ist.

Mittels des KVS-Ventils 6 wird der Wärmeträger an den Abluftwärmeübertragern AB2 und AB1 vorbeigeführt, wenn aus dem Abluftvolumenstrom AV mehr Energie entnommen werden kann als im Zuluftvolumenstrom ZV nach den Vorgaben für die Luftbehandlung benötigt wird. Das KVS-Ventil 6 wird mit Hilfe von Messwerten der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann in der Anordnung nach Figur 2 ein weiterer hier nicht dargestellter Temperaturfühler vor dem Eintritt in die Zuluftwärmeübertrager ZU1, ZU2 im Zuluftvolumenstrom ZV eingesetzt werden, wenn mit der Einrichtung auch Kälterückgewinnung betrieben werden soll.

Ist die Temperatur vor den Zuluftwärmeübertrager ZU1 höher als die Ablufttemperatur tABL vor dem Abluftwärmeübertrager AB1 wird der Wärmeübertrager im Kühlfall durch alle Wärmeübertrager geleitet

Ist die Ablufttemperatur tABL im Kühlfall höher als die Temperatur vor dem Zuluftwärmeübertrager ZU1 wird der Wärmeübertrager über die Leitung 5 als Bypass zur Abluftauskopplung geleitet.

Sind im Heizfall die eingesetzten Wärmeübertrager so effektiv, dass der Zuluftvolumenstrom ZV auf Grund einer zu großen Energiezufuhr aus dem Abluftvolumenstrom AV zu warm werden könnte, kann in der Anordnung nach Figur 2 ein weiterer hier nicht dargestellter Temperaturfühler nach den Zuluftwärmeübertragern ZU1, ZU2 im Zuluftvolumenstrom ZV zum Einsatz kommen.

Unter Verwendung der zuvor benannten Temperaturmessungen und mittels der Regeleinrichtung R kann ebenfalls ein Anteil des Wärmeträgers durch die Leitung 5 als Bypass zur Abluftauskopplung geführt werden.

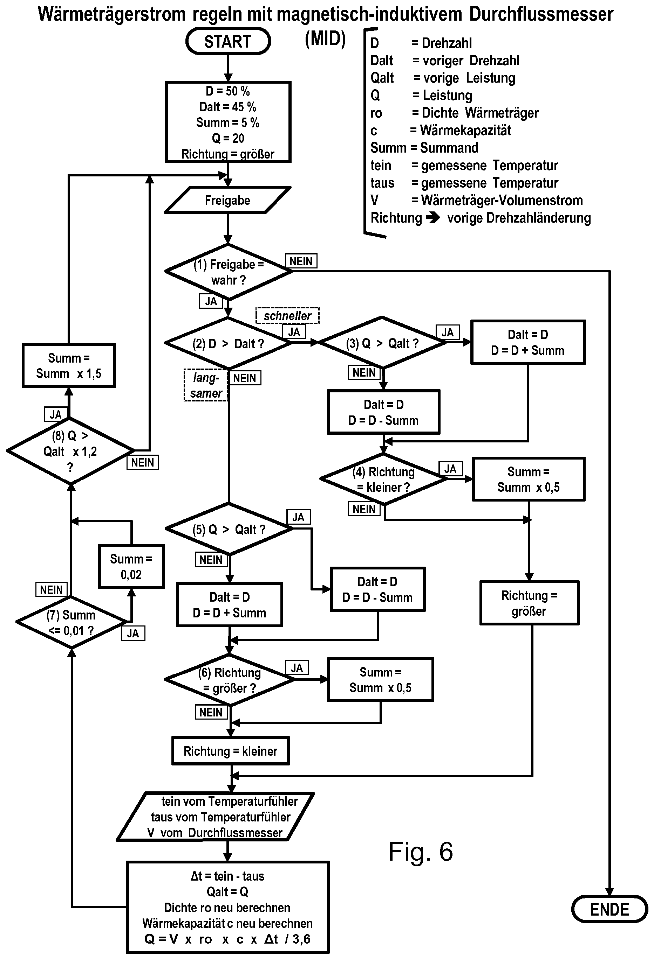

In Figur 6 ist ein mögliches Regelschema für das erfindungsgemäße Verfahren nach Anspruch 1 unter Einbeziehung von Temperaturmessungen des Wärmeträgers und einer Volumenstrommessung nach dem Verfahren der magnetisch-induktiven Volumenmessung MID dargestellt.

Zunächst sind die zur Verwendung innerhalb des Verfahrens vorgesehenen Parameter genannt. Dies sind:
- D: als bekannte oder eingestellte Drehzahl der Umwälzpumpe 9
- Dalt: als jeweils vorher eingestellte Drehzahl der Umwälzpumpe 9
- Qalt: als vorherige Leistung
- ro: als Dichte des Wärmeträgers
- c: als spezifische Wärmekapazität des Wärmeträgers
- Summ: als jeweils anzuwendender Summand
- tEIN: als gemessene Eintrittstemperatur des Wärmeträgers an den Abluftwärmeübertragern AB1, AB2
- tAUS: als gemessene Austrittstemperatur des Wärmeträgers nach den Abluftwärmeübertragern AB1, AB2
- V: als gemessener Volumenstrom des Wärmeträger-Volumenstroms
- Richtung: als durchlaufende Variable der Änderungsrichtung der Drehzahl der Umwälzpumpe zwischen D und Dalt.

Der Regelprozess wird mit festlegten Parametern D, Dalt, Summ, Q und der Richtungsvorgabe [GRÖSSER] für das Verhältnis der Drehzahlen D, Dalt der Umwälzpumpe 9 gestartet. Diese Vorgabewerte werden auf Grund von Erfahrungswerten ausgewählt.

Damit kann die Regelung freigegeben werden. Diese Freigabe erfolgt auf der Basis von Einschaltsignalen zur Inbetriebnahme des Kreislaufverbundsystems, die vom Betreiber ausgeführt oder mittels einer Steuerung zeitabhängig vorgenommen werden können.

Im Folgenden wird bei der Beschreibung des Ablaufes des Regelprozesses jeweils angegeben wie der Regelprozess mit den Prozessdaten weitergeleitet wird, wobei jeweils nur der Begriff Prozess für Weiterleitung verwendet wird.

Vom Startpunkt aus wird also der Prozess über die Vorgabe [FREIGABE] an eine Verzweigungsstelle [1] geleitet. Dort wird der Wert [FREIGABE] überprüft und über den Ausgang [JA] wird der Prozess zu einer Verzweigungsstelle [2] geleitet, in der ein Vergleich der Drehzahlen D und Dalt erfolgt.

Wenn zwischenzeitlich der Regelprozess abgebrochen werden soll, weil die Anlage aus verschiedenen Gründen stillgesetzt werden soll, wird der Prozess in der Verzweigungsstelle [1] über den Ausgang [NEIN] zum Regelungsende geleitet.

In der Verzweigungsstelle [2] wird der Prozess auf Basis der Vorgabewerte D/Dalt in Richtung [JA] zu einer Verzweigungsstelle [3] weitergeleitet.

Für den Vergleich der übertragenen Leistungen liegt für Q noch kein Vergleichswert vor. Daher ist Q größer als Qalt und der Prozess wird in der Verzweigungsstelle [3] über den Ausgang [JA] zu einem Verrechnungspunkt geführt. Dort wird die Drehzahl Dalt der Umwälzpumpe 9 durch den Wert von D ersetzt und der Wert von D wird um den Summanden erhöht. Die neuen Werte werden dem Prozess nach dem Ausgang [NEIN] der Verzweigungsstelle [3] wieder zugeführt und einer nächsten Verzweigungsstelle [4] zugeleitet.

Da nun eine Erhöhung der Drehzahl D erfolgen soll, ist als Variable Richtung [GRÖSSER] anzunehmen und der Prozess wird in der Verzweigungsstelle [4] bei Abfrage der Richtung zum Ausgang [NEIN] durchgeleitet und dem Prozess mit der Variablen Richtung als [GRÖSSER] zugeführt.

Die Prozessdaten werden dem Prozess danach vor der Erfassung der Temperaturen tEIN und tAUS sowie des Volumenstroms V vom Volumenstrommessgerät wieder zugeführt.

Davon ausgehend wird der Prozess inklusive der Temperaturmesswerte tEIN, tAUS und dem Volumenstrom V einer Leistungsrechnung zugeführt.

Hier wird aus tEIN und tAUS ein Δt berechnet. Der Wert Qalt wird durch den bekannten Wert Q ersetzt. Die Dichte ro sowie die spezifische Wärmekapazität c des Wärmeträgers können neu berechnet werden. Danach wird die Leistung nach der Formel Q = V * ro * c * Δt / 3,6 neu berechnet.

Von der Leistungsrechnung wird der Prozess einer Verzweigungsstelle [7] zugeleitet. In der Verzweigungsstelle [7] wird der Summand SUMM auf eine übermäßige Verringerung gegenüber dem Wert 0,01 geprüft. Wird dieser Wert erreicht oder unterschritten wird hier der Summand SUMM auf 0,02 vergrößert.

Danach wird der Prozess einer Verzweigungsstelle [8] zugeleitet.

In der Verzweigungsstelle [8] wird die Leistung Q auf eine übermäßige Erhöhung gegenüber einem mit dem Faktor 1,2 erhöhten Wert der Leistung Qalt geprüft. Dies ist für den Fall einer Änderung der Prozessrahmendaten, etwa bei einem zwischenzeitlich erhöhten Abluftvolumenstrom AV notwendig, um schneller in den gewünschten Regelbereich zu kommen. Dazu würde hier der Summand SUMM vergrößert.

Im normalen Regelprozess wird der Prozess am Ausgang [NEIN] der Verzweigungsstelle [8] weitergeleitet und dem Regelprozess vor der Verzweigungsstelle [1] wieder zugeführt.

Wenn immer noch das Signal [FREIGABE] vorliegt, wird der Prozess wieder zu der Verzweigungsstelle [2] geleitet. Da nun die aktuelle Drehzahl D immer noch größer ist als die vorherige Drehzahl Dalt wird der Prozess wieder über den Ausgang [JA] zu der Verzweigungsstelle [3] geleitet.

Im aktuellen Regelprozess gibt es von der Verzweigungsstelle [3] ausgehend die folgenden Möglichkeiten zur Weiterführung des Regelprozesses:
a) Die aktuelle Leistung Q ist größer als die vorherige Leistung Qalt. Dann wird über den Ausgang [JA] wie bereits beschrieben die Drehzahl D um den Summanden erhöht. Die Variable Richtung ist wieder [GRÖSSER].
b) Die aktuelle Leistung Q ist kleiner als die vorherige Leistung Qalt. Dann wird über den Ausgang [NEIN] die Drehzahl D in einem Verrechnungspunkt um den Summanden verringert.
   Wenn danach die Variable Richtung [KLEINER] ist, wird der Prozess über den Ausgang [JA] zu einem weiteren Verrechnungspunkt weitergeleitet. Dort wird der Summand mit dem Faktor 0,5 verringert.
   Der Prozess wird danach mit der Variablen Richtung als [GRÖSSER] weitergeleitet. Die Variable Richtung bleibt bei [GRÖSSER].

Danach erfolgt erneut die Zuführung des Prozesses mit den Temperaturmessungen und der Volumenstrommessung zur Leistungsrechnung und wird über die Verzweigungsstellen [7] und [8] zurück zum Beginn des Regelprozesses und bei [FREIGABE] auf die Verzweigungsstellen [1] und [2] geführt.

An der Verzweigungsstelle [2] ist nun die Drehzahl D nach der vorherigen Ermittlung a) größer oder schneller als Dalt und nach der vorherigen Ermittlung b) ist die Drehzahl D kleiner oder langsamer als Dalt.

Daraus ergeben sich zwei Alternativen zur Weiterführung des Regelprozesses, wobei die Variable Richtung entsprechend ihrer vorherigen Festlegung auf den Wert [GRÖSSER] oder [KLEINER] verarbeitet wird.

Ist D nach a) schneller als Dalt wird in der Verzweigungsstelle [2] der Prozess über den Ausgang [JA] zur Verzweigungsstelle [3] geleitet. Dort werden wiederum die Ermittlungsvarianten a) und b) abgearbeitet und der Prozess wird mit der Variablen Richtung als [GRÖSSER] der Leistungsrechnung zugeführt. Dieser Wert wird in diesem Umlauf durch den Regelprozess mitgenommen.

Ist D nach b) langsamer als Dalt wird in der Verzweigungsstelle [2] der Prozess über den Ausgang [NEIN] zu einer Verzweigungsstelle [5] geleitet. Dort wird ein Leistungsvergleich zwischen Q und Qalt durchgeführt.

Im aktuellen Regelprozess gibt es von der Verzweigungsstelle [5] ausgehend die folgenden Möglichkeiten zur Weiterführung des Regelprozesses:
c) Die aktuelle Leistung Q ist größer als die vorherige Leistung Qalt. Dann wird über den Ausgang [JA] zu einem Verrechnungspunkt geführt, in dem die vorherige Drehzahl durch die Drehzahl D ersetzt wird. Die Drehzahl D wird weiterhin um den Summanden mit dem ursprünglichen Wert verringert. Der Prozess wird nun einer Verzweigungsstelle [6] zugeleitet.
d) Die aktuelle Leistung Q ist kleiner als die vorherige Leistung Qalt. Dann wird über den Ausgang [NEIN] die vorherige Drehzahl Dalt in einem weiteren Verrechnungspunkt durch die Drehzahl D ersetzt und die Drehzahl D wird um den Summanden vergrößert. Die Variable Richtung ist noch [GRÖSSER] und der Prozess wird über den Ausgang [JA] zu einem weiteren Verrechnungspunkt weitergeleitet. Dort wird der Summand SUMM mit dem Faktor 0,5 verringert. Der Prozess wird danach mit der Variablen Richtung als [KLEINER] weitergeleitet, wobei dieser Wert beim nächsten Regelumlauf zur Anwendung kommt.

Da die Variable Richtung nach den Änderungen der Drehzahlen D, Dalt nun den Wert [KLEINER] hat, wird der Prozess über den Ausgang [NEIN] mit der Variablen Richtung als [KLEINER] weitergeleitet. Die Prozessdaten werden danach wieder über die Temperatur- und Volumenstromermittlung der Leistungsrechnung zugeführt.

Der Prozess wird nun wieder über die Verzweigungsstellen [7] und [8] zurück zum Beginn des Regelprozesses und bei [FREIGABE] auf die Verzweigungsstellen [1] und [2] geführt

Aus den Alternativen a) bis d) des Regelprozesses wird also durch einen jeweiligen Leistungsvergleich der Prozess jeweils ausgehend von dem Vergleich der Drehzahlen D, Dalt am Verzweigungspunkt [2] so weitergeführt, dass sich eine stetige Erhöhung der Leistungsübertragung ergibt.

Im Regelprozess ist dabei sowohl eine weitere Drehzahlerhöhung an der Umwälzpumpe 9 möglich, wenn sich daraus eine weitere Erhöhung der Leistungsübertragung ergibt. Andererseits wird bei einer Verringerung der Leistungsübertragung eine Drehzahlerhöhung oder eine Drehzahlverringerung an der Umwälzpumpe 9 möglich je nachdem in welcher Richtung sich eine erneute Erhöhung der Leistungsübertragung ergibt.

Die Drehzahländerungen werden über eine entsprechende Anwendung des Summanden SUMM bewirkt. Weiterhin wird zum Ausführen eines Einschwingvorgangs des Regelprozesses um den maximalen Grad an Leistungsübertragung der Summand SUMM jeweils verkleinert. Im Beispiel wird der Summand SUMM jeweils halbiert, allerdings wird die Verringerung im Verzweigungspunkt [7] auf den Wert 0,02 begrenzt.

Damit ergibt sich eine asymptotische Annäherung des Regelprozesses an die maximal mögliche Leistungsübertragung mit sich stetig verringernder Schwingweite, die auf einen Wert entsprechend dem Summanden SUMM = 0,02 begrenzt bleibt, um weiterhin eine echte Regelung zu ermöglichen.

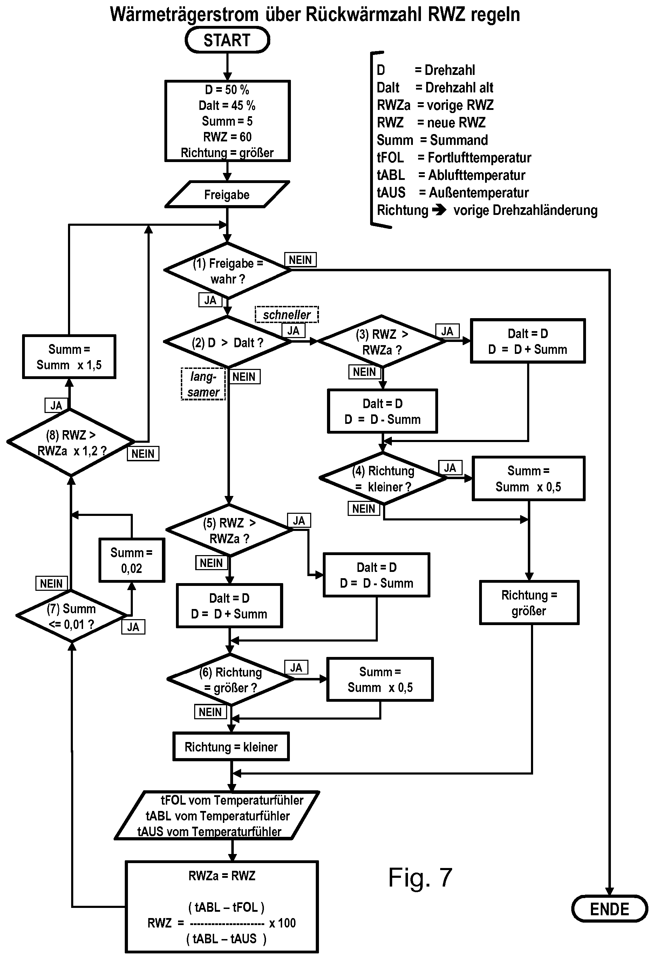

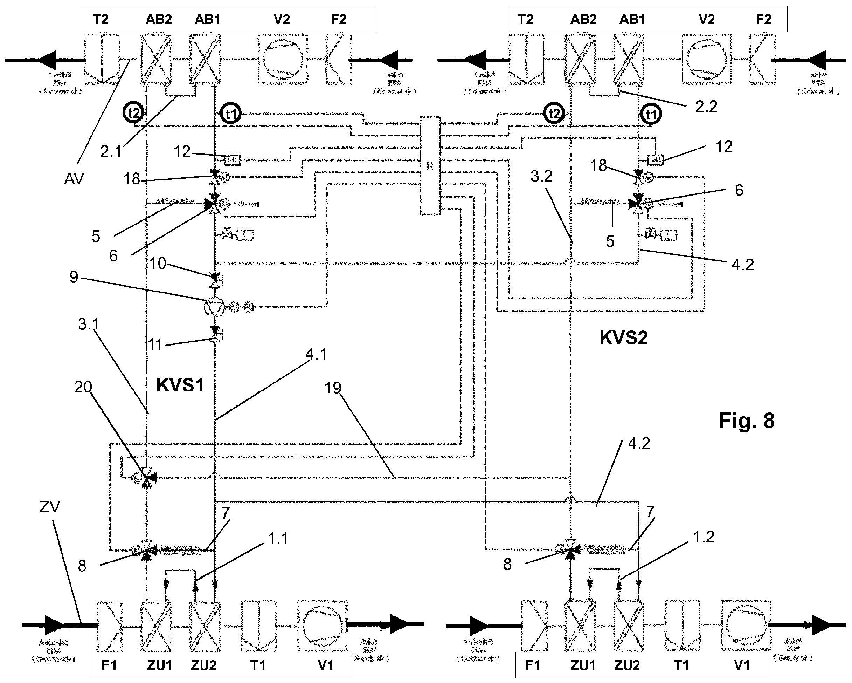

In Figur 7 ist ein mögliches Regelschema für ein anderes nicht durch die Ansprüche erfasstes Verfahren unter Einbeziehung von Temperaturmessungen im Abluftvolumenstrom AV und im Zuluftvolumenstrom ZV über eine daraus ermittelbare Rückwärmzahl RWZ dargestellt.

Zunächst sind die zur Verwendung innerhalb des Verfahrens vorgesehenen Parameter genannt. Dies sind:
- D: als bekannte oder eingestellte Drehzahl der Umwälzpumpe 9
- Dalt: als jeweils vorher eingestellte Drehzahl der Umwälzpumpe 9
- RWZa: als vorige Rückwärmzahl RWZ
- RWZ: als neue Rückwärmzahl RWZ
- SUMM: als Summand zur Veränderung der Drehzahl der Umwälzpumpe 9
- tFOL: als Fortlufttemperatur
- tABL: als Ablufttemperatur
- tAUS: als Außentemperatur
- Richtung: als Variable der Änderungsrichtung der Drehzahl der Umwälzpumpe 9 zwischen D und Dalt.

Der Regelprozess wird mit festlegten Parametern D, Dalt, Summ, RWZ und der Richtungsvorgabe [GRÖSSER] für das Verhältnis der Drehzahlen D, Dalt der Umwälzpumpe 9 gestartet. Diese Vorgabewerte werden auf Grund von Erfahrungswerten ausgewählt.

Der Regelprozess nach Figur 7 ist ähnlich aufgebaut wie der Regelprozess nach Figur 6.

Daher werden hier nur die Unterschiede benannt.

Wesentlich ist, dass in Verzweigungsstellen [3], [5], [7] und [8] nunmehr Vergleiche der Rückwärmzahlen RWZ und RWZa stattfinden.

Weiterhin wird nach einer Erfassung der Fortlufttemperatur tFOL und der Ablufttemperatur tABL im Abluftvolumenstrom AV und der Außentemperatur tAUS im Zuluftvolumenstrom ZV eine Rückwärmzahlrechnung vorgenommen. Hierbei wird die vorherige Rückwärmzahl RWZa durch die aktuelle Rückwärmzahl RWZ ersetzt. Danach wird die aktuelle Rückwärmzahl RWZ neu berechnet. Dies erfolgt nach der Formel RWZ = (tABL - tFOL) / (tABL - tAUS) * 100.

Die Prozessführung erfolgt unter Einbeziehung dieser Parameter analog zum Regelungsprozess nach Figur 6.

Dies gilt zunächst für den Einstieg in den Regelprozess. In einer Verzweigungsstelle [2] wird der Prozess auf Basis der Vorgabewerte D und Dalt in Richtung [JA] der Verzweigungsstelle [3] weitergeleitet.

Für den Vergleich Rückwärmzahlen RWZ und RWZa liegt für RWZ noch kein Vergleichswert RWZa vor. Daher ist RWZ größer als RWZa und der Prozess wird in der Verzweigungsstelle [3] über den Ausgang [JA] zu einem Verrechnungspunkt geführt. Dort wird die Drehzahl Dalt der Umwälzpumpe 9 durch den Wert von D ersetzt und der Wert von D wird um den Summanden erhöht. Die neuen Werte werden dem Prozess nach dem Ausgang [NEIN] der Verzweigungsstelle [3] wieder zugeführt und einer nächsten Verzweigungsstelle [4] zugeleitet.

War zuvor die Variable Richtung [KLEINER] wird der Summand SUMM mit 0,5 multipliziert. Immer wenn sich die vorherige Variable Richtung geändert hat, halbiert sich anschließend der Summand SUMM.

Die Rückführung des Prozesses zum Ausgangspunkt erfolgt wieder über die Verzweigungsstellen [7] und [8]. Dort kann zunächst eine Begrenzung des Summanden SUMM auf 0,02 erfolgen. Weiterhin kann auch eine Erhöhung des Summanden SUMM erfolgen, wenn die Rückwärmzahl RWZ stark angestiegen ist, weil zum Beispiel der Abluftvolumenstrom AV verändert wurde.

Im Weiteren werden nunmehr im aktuellen Regelprozess von der Verzweigungsstelle [3] aus die Möglichkeiten a) und b) zur Weiterführung des Regelprozesses wie folgt ermittelt:
a) Die aktuelle Rückwärmzahl RWZ ist größer als die vorherige Rückwärmzahl RWZa. Dann wird über den Ausgang [JA] wie bereits beschrieben die Drehzahl D um den Summanden erhöht. Die Variable Richtung ist wieder [GRÖSSER].
b) Die aktuelle Rückwärmzahl RWZ ist kleiner als die vorherige Rückwärmzahl RWZa. Dann wird über den Ausgang [NEIN] die Drehzahl D in einem Verrechnungspunkt um den Summanden verringert. Der Prozess wird nun über den Ausgang [JA] zu einem weiteren Verrechnungspunkt weitergeleitet. Dort wird der Summand mit dem Faktor 0,5 multipliziert und daher verringert. Der Prozess wird danach mit der Variablen Richtung als [GRÖSSER] weitergeleitet.
   Schließlich werden auch Im aktuellen Regelprozess von der Verzweigungsstelle [5] aus die Möglichkeiten c) und d) zur Weiterführung des Regelprozesses wie folgt ermittelt:
c) Die aktuelle Rückwärmzahl RWZ ist größer als die vorherige Rückwärmzahl RWZa. Dann wird über den Ausgang [JA] zu einem Verrechnungspunkt geführt, in dem die vorherige Drehzahl durch die Drehzahl D ersetzt wird. Die Drehzahl D wird weiterhin um den Summanden SUMM mit dem ursprünglichen Wert verringert. Der Prozess wird nun einer Verzweigungsstelle [6] zugeleitet.
d) Die aktuelle Rückwärmzahl RWZ ist kleiner als die vorherige Rückwärmzahl RWZa. Dann wird über den Ausgang [NEIN] die vorherige Drehzahl Dalt in einem weiteren Verrechnungspunkt durch die Drehzahl D ersetzt und die Drehzahl D wird um den Summanden SUMM vergrößert. Der Prozess wird nun über den Ausgang [JA] zu einem weiteren Verrechnungspunkt weitergeleitet. Dort wird der Summand SUMM mit dem Faktor 0,5 multipliziert und daher verringert. Der Prozess wird danach mit der Variablen Richtung als [KLEINER] weitergeleitet.

Aus den Alternativen a) bis d) des Regelprozesses wird also durch einen jeweiligen Vergleich der Rückwärmzahlen RWZ, RWZa der Prozess jeweils in die Richtung geführt, die zu einer Erhöhung der Rückwärmzahl RWZ führt.

Hierbei ist sowohl eine weitere Drehzahlerhöhung an der Umwälzpumpe 9 möglich, wenn sich daraus eine weitere Erhöhung der Rückwärmzahl RWZ ergibt. Andererseits wird bei einer Verringerung der Rückwärmzahl RWZ eine Drehzahlerhöhung oder eine Drehzahlverringerung an der Umwälzpumpe 9 möglich je nachdem in welcher Richtung sich eine erneute Erhöhung der Rückwärmzahl RWZ ergibt.

Die Drehzahländerungen werden über eine entsprechende Anwendung des Summanden SUMM bewirkt. Weiterhin wird zum Ausführen eines Einschwingvorgangs des Regelprozesses um den maximalen Wert der Rückwärmzahl RWZ der Summand SUMM jeweils verkleinert. Im Beispiel wird der Summand SUMM jeweils halbiert, allerdings wird die Verringerung im Verzweigungspunkt [7] auf den Wert 0,02 begrenzt.

Damit ergibt sich eine asymptotische Annäherung des Regelprozesses an die maximal mögliche Rückwärmzahl RWZ mit sich stetig verringernder Schwingweite, die auf einen Wert entsprechend dem Summanden SUMM = 0,02 begrenzt bleibt, um weiterhin eine echte Regelung zu ermöglichen.

Der Regelungsprozess nach Figur 7 wird entsprechend ausgeführt, wenn die Rückwärmzahl RWZ in einer Anordnung nach Figur 5 aus einer Außenlufttemperatur tAUL und einer Zulufttemperatur tZUL im Zuluftvolumenstrom ZV sowie einer Ablufttemperatur tABL im Abluftvolumenstrom AV berechnet wird.

Kern der Erfindung ist ein Verfahren zur Regelung eines Wärmeträger-Volumenstromes in einem Kreislaufverbundsystem, wobei eine maximal mögliche Leistungsübertragung über den Wärmeträger gegeben ist.

Ein solches Verfahren kann gemäß Anspruch 1 mittels der Temperaturerfassung im Wärmeträger vor und nach dem Durchgang durch die Abluftwärmeübertrager AB1, AB2 und einer Messung des Wärmeträger-Volumenstroms durchgeführt werden.

Alternativ kann ein anderes nicht von den Ansprüchen erfasstes Verfahren mittels Temperaturmessungen zur Ermittlung des maximal möglichen Temperaturänderungsgrades zwischen dem Abluftvolumenstrom AV und dem Zuluftvolumenstrom ZV durchgeführt werden. Die Regelung kann nach jeweils vorliegenden Erfordernissen erweitert werden.

Eine Regelung nach einer nicht von den Ansprüchen erfassten Ausführung kann so auch in einem aus zwei Kreislaufverbundsystemen bestehenden Regelsystem nicht in erster Linie durch Steuerung der Umwälzpumpe 9, sondern durch eine Verteilung der Wärmeenergie mittels eines Dreiwegeventils sowie von Volumenregelventilen vorgenommen werden, um die Energieausbeute für den jeweiligen Betriebsfall am Maximum zu halten. Die Umwälzpumpe 9 braucht nur in Bezug auf den Gesamtleistungsbedarf geregelt zu werden, der von Betriebsfall zu Betriebsfall unterschiedlich hoch ist.

## Patentansprüche

1. Verfahren zur Regelung eines Wärmeträger-Volumenstroms in einem Kreislaufverbundsystem mit wenigstens einem in einem Zuluftvolumenstrom (ZV) angeordneten Zuluftwärmeübertrager (ZU1, ZU2) und wenigstens einem in einem Abluftvolumenstrom (AV) angeordneten Abluftwärmeübertrager (AB1, AB2), wobei der/die Zuluftwärmeübertrager (ZU1, ZU2) und der/die Abluftwärmeübertrager (AB1, AB2) mittels Wärmeträgerleitungen (3, 4) derart gekoppelt sind, dass der Wärmeträger mittels wenigstens einer Umwälzpumpe (9) nacheinander durch alle im Zuluftvolumenstrom (ZV) angeordneten Zuluftwärmeübertrager (ZU1, ZU2) und danach durch alle im Abluftvolumenstrom (AV) angeordneten Abluftwärmeübertrager (AB1, AB2) förderbar ist,
**dadurch gekennzeichnet,**
**dass** das Kreislaufverbundsystem so betrieben wird, dass auf der Basis von Temperaturmessungen des Wärmeträger-Volumenstroms vor dem Eintritt in den/die Abluftwärmeübertrager (AB1, AB2) und nach dem Austritt aus dem/den Abluftwärmeübertragern (AB1, AB2),
sowie einer parallel dazu ausgeführten Volumenstrommessung des Wärmeträger-Volumenstroms (V)
durch Änderung der Drehzahl der Umwälzpumpe (9), der Wärmeträger-Volumenstroms so ausgeregelt wird, dass mittels des gemessenen Wärmeträger-Volumenstroms (V) und der Temperaturmessungen eine Ermittlung einer maximal möglichen Leistungsübertragung mittels des Wärmeträgers erfolgt und
**dass** die Drehzahl der Umwälzpumpe (9) und damit der Wärmeträger-Volumenstrom derart geregelt werden, dass eine maximal mögliche Leistungsübertragung mittels des Wärmeträgers erfolgt.

2. Verfahren nach Anspruch 1, **dadurch gekennzeichnet,**
**dass** der Wärmeträger-Volumenstrom in dem Kreislaufverbundsystem auf der Basis von Temperaturmesswerten des Wärmeträgers vor dem Eintritt des Abluftvolumenstroms in den/die Abluftwärmeübertrager (AB1, AB2) und nach dem Austritt aus dem/den Abluftwärmeübertragern (AB1, AB2) sowie einer parallel dazu ausgeführten Volumenstrommessung des Wärmeträger-Volumenstroms (V) derart geregelt wird,
**dass** bei Feststellung einer sich steigernden Leistungsübertragung mittels des Wärmeträgers der Wärmeträger-Volumenstrom mittels der Umwälzpumpe (9) nach einer zuvor sich verringernden Leistungsübertragung mittels des Wärmeträgers entgegen einer zuvor vorgenommenen Volumenstromänderung verändert wird oder
nach einer zuvor sich steigernden Leistungsübertragung mittels des Wärmeträgers um ein geringeres Maß gegenüber einer zuvor vorgenommenen Volumenstromänderung verändert wird.

3. Kreislaufverbundsystem zur Durchführung eines Verfahrens zur Regelung eines Wärmeträger-Volumenstrom mit wenigstens einem in einem Zuluftvolumenstrom (ZV) angeordneten Zuluftwärmeübertrager (ZU1, ZU2) und wenigstens einem in einem Abluftvolumenstrom (AV) angeordneten Abluftwärmeübertrager (AB1, AB2), wobei der/die Zuluftwärmeübertrager (ZU1, ZU2) und der/die Abluftwärmeübertrager (AB1, AB2) mittels Wärmeträgerleitungen (3, 4) derart gekoppelt sind, dass der Wärmeträger mittels wenigstens einer Umwälzpumpe (9) nacheinander durch alle im Zuluftvolumenstrom (ZV) angeordneten Zuluftwärmeübertrager (ZU1, ZU2) und danach durch alle im Abluftvolumenstrom (AV) angeordneten Abluftwärmeübertrager (AB1, AB2) förderbar ist,
wobei in einer Wärmeträgerleitung (3) ein Temperaturfühler (t2) vor dem Eintritt des Wärmeträgers in den/die Abluftwärmeübertrager (AB1, AB2), dass in einer Wärmeträgerleitung (4) ein Temperaturfühler (t1) nach dem Austritt des Wärmeträgers aus dem/den Abluftwärmeübertragern (AB1, AB2) angeordnet ist, **dadurch gekennzeichnet, dass** das Kreislaufverbundsystem zur Durchführung des Verfahrens nach Anspruch 1 eingerichtet ist, dass eine Volumenstrommesseinrichtung (12) der Umwälzpumpe (9) zugeordnet vorgesehen ist und dass eine Regeleinrichtung (R) in Verbindung mit den Temperaturfühlern (t1, t2), der Volumenstrommesseinrichtung (12) und der Umwälzpumpe (9) vorgesehen ist,
derart, dass auf Basis der festgestellten Messwerte mittels Veränderung des Wärmeträger-Volumenstroms eine sinkende Leistungsübertragung des Wärmeträgers ausgeregelt wird, sodass eine Drehzahlerhöhung oder eine Drehzahlverringerung an der Umwälzpumpe (9) erfolgt, je nachdem in welcher Richtung sich eine erneute Erhöhung der Leistungsübertragung ergibt.

4. Anordnung umfassend ein Kreislaufverbundsystem nach Anspruch 3 und mehrere Lüftungsgeräte.

5. Verwendung eines Kreislaufverbundsystems nach Anspruch 3 für die Entfeuchtung eines Luftvolumenstroms.

## Claims

1. Method for regulating the flow of a heat transfer volume in an integrated circuit system with at least one supply air heat exchanger (ZU1, ZU2) arranged in a supply air volume flow (ZU1, ZU2) and at least one exhaust air heat exchanger (AB1, AB2) arranged in an exhaust air volume flow (AV), wherein the supply air heat exchanger(s) (ZU1, ZU2) and the exhaust air heat exchanger(s) (AB1, AB2) are coupled by means of heat transfer pipes (3, 4) in such a way that the heat transfer medium is movable by means of at least one circulation pump (9) and can be conveyed successively through all supply air heat exchangers (ZU1, ZU2) arranged in the supply air volume flow (ZU1, ZU2) and thereafter through all exhaust air heat exchangers (AB1, AB2) arranged in the exhaust air volume flow (AV),
**characterised in that**
the integrated circuit system is operated in such a way that, on the basis of temperature measurements of the heat transfer volume flow before the entry into the exhaust air heat exchanger(s) (AB1, AB2) and after the exit from the exhaust air heat exchanger(s) (AB1, AB2), as well as a parallel volume flow measurement of the heat transfer volume flow (V) by changing the speed of the circulation pump (9), the heat transfer volume flow is regulated in such a way that by means of the measured heat transfer volume flow (V) and the temperature measurements, a maximum possible power transfer by means of the heat transfer medium is determined and that the speed of the circulation pump (9) and thus the heat transfer volume flow are regulated in such a way that a maximum possible power transfer is carried out by means of the heat transfer medium.

2. Method according to claim 1,**characterized by** the fact that
the heat transfer volume flow in the integrated circuit system is regulated on the basis of temperature measurement values of the heat transfer medium before the entry of the exhaust air volume flow into the exhaust air heat exchanger(s) (AB1, AB2) and after the exit from the exhaust air heat exchanger(s) (AB1, AB2) as well as a volume flow measurement of the heat transfer medium volume flow (V) carried out in parallel in such a way that if an increasing power transfer is detected of the heat transfer medium of the heat transfer volume flow by means of the circulation pump (9) is changed by means of the heat transfer medium after a previously decreasing power transfer by means of the heat transfer medium in contrast to a previously made volume flow change or is changed by a smaller amount compared to a previously made volume flow change after a previously increasing power transfer by means of the heat transfer medium.

3. Integrated circuit system for carrying out a process for regulating a heat transfer volume flow with at least one supply air heat exchanger (ZU1, ZU2) arranged in a supply air volume flow (ZV) and at least one exhaust air heat exchanger (AB1, AB2) arranged in an exhaust air volume flow (AV), wherein the supply air heat exchanger(s) (ZU1, ZU2) and the exhaust air heat exchanger(s) (AB1, AB2) are coupled by means of heat transfer pipes (3, 4) in such a way that the heat transfer medium is movable by means of at least one circulation pump (9) and can be conveyed successively through all supply air heat exchangers (ZU1, ZU2) arranged in the supply air volume flow (ZV) and thereafter through all exhaust air heat exchangers (AB1, AB2) arranged in the exhaust air volume flow (AV), wherein in a heat transfer line (3) a temperature sensor (t2) is used before the heat transfer medium enters the exhaust air heat exchanger (AB1, AB2), that in a heat transfer line (4) a temperature sensor (t1) is arranged after the heat transfer medium has left the exhaust air heat exchanger(s) (AB1, AB2), **characterized by** the fact that
the integrated circuit system is set up for carrying out the method according to claim 1, that a volume flow measuring device (12) is provided assigned to the circulation pump (9) and that a control device (R) is provided in conjunction with the temperature sensors (t1, t2), the volume flow measuring device (12) and the circulation pump (9), in such a way that on the basis of the measured values determined by changing the heat transfer volume flow, a decreasing power transfer of the heat transfer medium may be regulated so that the rotating speed is increased or reduced at the circulation pump (9), depending on the direction in which a following increase in power transfer occurs.

4. Arrangement comprising an integrated circuit system according to claim 3 and several ventilation units.

5. Use of an integrated circuit system according to claim 3 for dehumidification of an air volume flow.

## Revendications

1. Procédé de régulation d'un débit volumique de fluide caloporteur dans un système de circuit intégré avec au moins un échangeur de chaleur d'air d'alimentation (ZU1, ZU2) disposé dans un débit volumique d'air d'alimentation (ZV) et au moins un échangeur de chaleur d'air d'échappement (AB1, AB2) disposé dans un débit volumique d'air d'échappement (AV), dans lequel le(s) échangeur(s) de chaleur d'air d'alimentation (ZU1, ZU2) et le(s) échangeur(s) de chaleur d'air d'échappement (AB1, AB2) sont couplés au moyen des conduites de fluide caloporteur (3, 4) de telle manière que le fluide caloporteur est relié au moyen d'au moins une pompe de circulation (9) peut être transporté successivement par tous les échangeurs de chaleur d'air d'alimentation (ZU1, ZU2) disposés dans le débit volumique d'air d'échappement (ZV), puis par tous les échangeurs de chaleur d'air d'échappement (AB1, AB2) disposés dans le débit volumique d'air d'échappement (AV),
**caractérisée par le fait que** le système de circuit intégré fonctionne de telle sorte que, sur la base de mesures de température du débit volumique de fluide caloporteur avant l'entrée dans le(s) échangeur(s) de chaleur d'air d'échappement (AB1, AB2) et après la sortie du ou des échangeurs de chaleur d'air d'échappement (AB1, AB2), ainsi que d'une mesure parallèle du débit volumique de fluide caloporteur (V) en modifiant la vitesse de la pompe de circulation (9), le débit volumique de fluide caloporteur est régulé de telle sorte qu'au moyen du débit volumique de fluide caloporteur (V) mesuré et les mesures de température, un transfert de puissance maximal possible au moyen du fluide caloporteur est déterminé et que la vitesse de la pompe de circulation (9) et donc le débit volumique de fluide caloporteur sont régulées de telle manière qu'un transfert de puissance maximal possible est effectué au moyen du fluide caloporteur.

2. Procédé selon la revendication 1, **caractérisée par le fait que**
le débit volumique de fluide caloporteur dans le système de circuit intégré sur la base des relevés de température du fluide caloporteur avant que le débit volumique d'air d'échappement n'entre dans le(s) échangeur(s) de chaleur d'air d'échappement (AB1, AB2) et après la sortie du/des échangeur(s) de chaleur d'air d'échappement (AB1, AB2) ainsi qu'une mesure parallèle du débit volumique de fluide caloporteur (V)
- est régulé de telle sorte que, si un transfert de puissance croissant au moyen du fluide caloporteur est détecté, le débit volumique de fluide caloporteur au moyen de la pompe de circulation (9) après un transfert de puissance précédemment décroissant au moyen du fluide caloporteur
- est modifié contrairement à une modification antérieure du débit volumique ou est modifié dans une moindre mesure par rapport à une modification antérieure du débit volumique après une transmission de puissance précédemment croissante au moyen du fluide caloporteur.

3. système de circuit intégré pour la réalisation d'un procédé de régulation d'un débit volumique de fluide caloporteur avec au moins un échangeur de chaleur d'air d'alimentation (ZU1, ZU2) disposé dans un débit volumique d'air d'alimentation (ZV) et au moins un échangeur de chaleur d'air d'échappement (AB1, AB2) disposé dans un flux volumique d'air d'échappement (AV), dans lequel le(s) échangeur(s) de chaleur d'air d'alimentation (ZU1, ZU2) et le(s) échangeur(s) de chaleur d'air d'échappement (AB1, AB2) sont couplés au moyen des conduites de fluide caloporteur (3, 4) de telle manière que le fluide caloporteur est relié au moyen d'au moins d'une pompe de circulation (9) peut être transportée successivement par tous les échangeurs de chaleur d'air d'alimentation (ZU1, ZU2) disposés dans le débit volumique d'air d'alimentation (ZV) à 25 et ensuite par tous les échangeurs de chaleur d'air d'échappement (AB1, AB2) disposés dans le débit volumique d'air d'échappement (AV), dans un conduite de fluide caloporteur (3) un capteur de température (t2) avant que le fluide caloporteur n'entre dans le(s) échangeur(s) de chaleur d'air d'échappement (AB1, AB2), que dans un conduite de fluide caloporteur (4) un capteur de température (t1) après la sortie fluide caloporteur du ou des échangeurs de chaleur d'air d'échappement (AB1, AB2),
**caractérisée par le fait que**
le système de circuit intégré est mis en place pour la mise en oeuvre du procédé selon la revendication 1, de prévoir un dispositif de mesure du débit volumique (12) attribué à la pompe de circulation (9) et de prévoir un dispositif de commande (R) en liaison avec les capteurs de température (t1, t2), le dispositif de mesure du débit volumique (12) et la pompe de circulation (9), de telle sorte que, sur la base des valeurs mesurées déterminées par la modification du débit volumique de fluide caloporteur, un transfert de puissance décroissant du fluide caloporteur de sorte que la vitesse est augmentée ou réduite au niveau de la pompe de circulation (9), en fonction de la direction dans laquelle se produit une nouvelle augmentation de la transmission de puissance.

4. Agencement comprenant un système de circuit intégré selon la revendication 3 et plusieurs unités de ventilation.

5. Utilisation d'un système de circuit intégré selon la revendication 3 pour la déshumidification d'un volume d'air
